# FASCICULE DE BREVET EUROPEEN

(11) **EP 2 601 118 B1**
(45) Date de publication et mention de la délivrance du brevet: **10.09.2014**
(21) Numéro de dépôt: 11752279.7
(22) Date de dépôt: 22.07.2011
(51) Int. Cl.: B65G 47/48, B65G 47/96, B07C 5/36

(54) **DISPOSITIF DE CONVOYAGE D'OBJETS TELS QUE DES FRUITS OU LÉGUMES, À POSITIONS DE DÉCHARGEMENT AJUSTABLES**
VORRICHTUNG ZUR FÖRDERUNG VON OBJEKTEN WIE FRÜCHTEN ODER GEMÜSE MIT EINSTELLBAREN ENTLADUNGSPOSITIONEN
DEVICE FOR CONVEYING OBJECTS SUCH AS FRUITS OR VEGETABLES, HAVING ADJUSTABLE UNLOADING POSITIONS

(30) Priorité: 03.08.2010 FR 1003250
(43) Date de publication de la demande: 12.06.2013
(73) Titulaire: MAF Agrobotic, 82000 Montauban (FR)
(72) Inventeur: BLANC, Stéphane, F-82001 Montauban Cedex (FR)
(74) Mandataire: Cabinet BARRE LAFORGUE & associés
(86) Numéro de dépôt international: PCT/FR2011/051778
(87) Numéro de publication internationale: WO 2012/017170

(56) Documents cités:
- EP-A1- 1 000 883
- DE-A1-102004 001 794
- US-A- 1 026 385
- US-A- 5 244 100

## Description

L'invention concerne un dispositif de convoyage d'objets, notamment de fruits ou légumes, adapté pour assurer le transport desdits objets et leur évacuation sélective au niveau de zones de déchargement. Elle concerne plus particulièrement un tel dispositif de convoyage d'objets adapté pour effectuer un triage des objets en fonction de critères de sélection prédéterminés par déchargement sélectif dans des zones de déchargement distinctes.

Un tel dispositif de convoyage d'objets comprend (cf. notamment US5230394, US5280838, US5626238, US6234297...) :
- un bâti fixe,
- au moins une ligne de convoyage apte à transporter les objets par rapport au bâti selon une direction d'entraînement, dite direction longitudinale,
- une pluralité de zones de déchargement réparties le long du bâti,
- pour chaque zone de déchargement, des organes de déclenchement du déchargement adaptés pour engendrer de façon sélective le déchargement latéral des objets arrivant au niveau de ladite zone de déchargement.

Une unité de commande est reliée aux organes de déclenchement du déchargement de façon à pouvoir les commander de façon sélective en fonction de critères prédéterminés de tri des objets (notamment selon leur poids, leur calibre, leur aspect déterminé par analyse optique...).

Les différents dispositifs connus permettent en particulier de bien adapter les conditions de transport et d'analyse des objets en fonction de leurs caractéristiques, notamment en évitant leur détérioration intempestive, s'agissant par exemple de fruits relativement fragiles.

La position de chaque organe de déclenchement du déchargement est déterminée de façon à assurer, en fonctionnement, la récupération de chaque objet convoyé dans la zone de déchargement correspondante. Cette position est donc en particulier déterminée en fonction de la nature exacte (en particulier masse volumique et dimensions) des objets et de la vitesse nominale de transport des objets par la ligne de convoyage.

Dans les zones de déchargement, il est souvent prévu des agencements tels que des rampes, des brosses rotatives... permettant d'éviter et/ou d'amortir la chute des objets. Pour que l'amortissement soit efficace, les objets doivent être déchargés en une zone relativement précise de ces agencements.

Or, il s'avère que dans certains dispositifs de convoyage, la vitesse d'entraînement de la ligne de convoyage peut varier.

Tout d'abord, la vitesse d'entraînement varie nécessairement à chaque démarrage et à chaque arrêt de la ligne de convoyage. La précision nécessaire de la position de déchargement interdit donc l'alimentation du dispositif de convoyage en objets, ou en tout cas le déchargement des objets, au cours des phases de démarrage et d'arrêt. En conséquence, ces phases ne peuvent pas être exploitées pour le convoyage et le tri des objets, ce qui nuit à la productivité de l'installation.

Par ailleurs, dans certains dispositifs de convoyage, la ligne de convoyage peut présenter une vitesse d'entraînement variable, notamment en fonction du débit des objets et/ou de la nature et/ou de la qualité des objets reçus à l'entrée. En conséquence, à chaque variation de la vitesse d'entraînement de la ligne de convoyage, et pour chaque série d'objets à convoyer, il est normalement nécessaire de procéder à un réglage de la position des organes de déclenchement du déchargement. Jusqu'à maintenant, ce réglage est effectué entièrement manuellement, ce qui est extrêmement long. Pour éviter un tel réglage, les organes de déclenchement du déchargement sont souvent positionnés en une position moyenne qui reste globalement satisfaisante pour la majorité des objets convoyés par le dispositif et pour une certaine gamme de vitesses d'entraînement. À chaque série d'objets convoyés, cette position moyenne est donc imparfaite, et il en résulte souvent un amortissement imparfait, des détériorations intempestives, voire des pertes d'objets.

EP 1 000 883 A1 divulgue un dispositif selon le preambule de la revendication 1.

L'invention vise à pallier ces inconvénients en proposant un dispositif de convoyage qui d'une part soit susceptible de recevoir des objets de différentes caractéristiques, et, d'autre part, puisse fonctionner à différentes vitesses d'entraînement, sans nécessiter aucun réglage manuel pour chaque condition de fonctionnement.

L'invention vise plus particulièrement à proposer un tel dispositif de convoyage présentant une productivité améliorée.

L'invention vise également à atteindre ces objectifs à moindre coût, et de façon compatible avec une grande variété de dispositifs de convoyage.

L'invention vise également à proposer une solution permettant non seulement d'équiper les dispositifs de convoyage neufs issus de fabrication, mais également de modifier les dispositifs de convoyage déjà en utilisation afin de les améliorer.

Pour ce faire, l'invention concerne un dispositif selon la revendication 1.

Dans une forme simplifiée de l'invention, chaque organe de déclenchement du déchargement peut être placé dans l'une ou l'autre des positions appartenant à au moins une pluralité discrète de positions. Par exemple, il peut être prévu uniquement deux positions distinctes : une position la plus en amont (par rapport au sens d'entraînement des objets par la ligne de convoyage) pour les vitesses les plus rapides et/ou les objets les moins denses, et une position la plus en aval pour les vitesses les plus lentes et/ou les objets les plus denses.

Néanmoins, selon l'invention, au moins un organe de déclenchement du déchargement dont la position longitudinale est ajustable, est monté par rapport au bâti de façon à pouvoir être déplacé par un dispositif d'actionnement en translation longitudinale selon une course d'ajustement entre deux positions longitudinales extrêmes amont et aval, et à être maintenu rigidement en toute position longitudinale intermédiaire de ladite course d'ajustement par rapport au bâti. De préférence le dispositif d'actionnement est apte à réaliser un ajustement continu de la position longitudinale de chaque organe de déclenchement du déchargement, selon la course d'ajustement.

Selon les applications, lesdits critères prédéterminés pris en compte par l'unité de commande pour déplacer chaque organe de déclenchement du déchargement dont la position longitudinale est ajustable, peuvent varier. Ces critères peuvent comprendre par exemple également le poids moyen des objets tel que déterminé par un poste de pesage et/ou tout ou partie de résultats d'analyses des objets, par exemple tels que fournis par un poste d'analyse optique des objets.

Avantageusement et selon l'invention, l'unité de commande est adaptée pour placer chaque organe de déclenchement du déchargement à une distance vers l'amont d'un point fixe de référence du bâti qui est une fonction monotone de la vitesse d'entraînement des objets le long de la ligne de convoyage. Cette fonction monotone peut faire l'objet de nombreuses variantes permettant d'optimiser le fonctionnement d'un dispositif selon l'invention. Avantageusement et selon l'invention, ladite fonction monotone est une fonction continue, par exemple polynomiale, de préférence une simple fonction affine ou linéaire.

L'ajustement de la position des organes de déclenchement du déchargement peut être prévu pour tout ou partie de ses organes de déclenchement du déchargement, de façon individuelle ou collective. Dans une forme la plus avancée de l'invention, l'unité de commande détermine, pour chaque objet convoyé, la position longitudinale exacte d'un organe de déclenchement du déchargement de cet objet, après avoir identifié cet organe de déclenchement du déchargement à utiliser pour cet objet en fonction des critères de sélection prédéterminée, et la détermination de cette position longitudinale exacte de l'organe de déclenchement du déchargement est elle-même déterminée en fonction de résultats d'analyses délivrées par des postes d'analyse situés en amont des zones de déchargement. Par exemple, en fonction du poids exact d'un objet, l'unité de commande peut être adaptée pour modifier en temps réel la position longitudinale de l'organe de déclenchement de déchargement de la zone de déchargement dans laquelle cet objet doit être évacué. Dans cette variante, chaque organe de déclenchement du déchargement est associé à un dispositif d'actionnement qui lui est propre.

De préférence cependant, avantageusement, un dispositif selon l'invention est caractérisé en ce que :
- les organes de déclenchement du déchargement des différentes zones de déchargement d'une même ligne de convoyage sont tous portés fixes sur un support commun,
- ledit support commun est monté par rapport au bâti de façon à pouvoir être déplacé en translation selon ladite direction longitudinale et associé à un dispositif d'actionnement apte à maintenir ledit support commun rigidement en position par rapport au bâti,
- le dispositif d'actionnement est relié à l'unité de commande de façon à pouvoir être commandé par cette dernière en fonction desdits critères prédéterminés.

Ledit support commun peut être un support spécifique rapporté par rapport au bâti et guidé en translation par rapport à ce dernier. Néanmoins, de préférence, avantageusement et selon l'invention, ledit support commun est un rail de guidage d'une chaîne sans fin de la ligne de convoyage.

Par ailleurs, avantageusement, dans un mode de réalisation selon l'invention, ledit dispositif d'actionnement comprend un moteur rotatif entraînant une vis à billes comprenant un chariot solidaire d'un support portant chaque organe de déclenchement du déchargement associé à ce dispositif d'actionnement.

L'invention s'applique avantageusement à un dispositif dans lequel chaque zone de déchargement comprend un dispositif d'amortissement de la chute des objets. Plus particulièrement, avantageusement, un dispositif selon l'invention est aussi caractérisé en ce que chaque zone de déchargement comprend une brosse rotative de réception des objets apte à amortir la chute de ces derniers lors de leur déchargement de la ligne de convoyage, et en ce que ladite unité de commande est adaptée pour ajuster la position longitudinale de chaque organe de déclenchement du déchargement de telle sorte que, pour chaque zone de déchargement, les objets chutent au moins sensiblement toujours dans une même zone d'une brosse rotative.

L'invention s'applique à un dispositif de convoyage dans lequel chaque ligne de convoyage est dotée de réceptacles de convoyage pouvant être formés de mains et/ou de godets et/ou de rouleaux... Les réceptacles de convoyage peuvent être portés par une chaîne sans fin, ou former eux-mêmes une telle chaîne sans fin en étant interconnectés deux à deux les uns aux autres.

Dans un mode de réalisation préférentiel avantageux et selon l'invention, la ligne de convoyage comprend une pluralité de mains de convoyage réparties le long de la ligne de convoyage, articulées sur des supports d'une chaîne sans fin longitudinale entraînée en déplacement selon la direction longitudinale, et dotées d'organes de maintien desdites mains de convoyage dans une position de transport des objets, les organes de déclenchement du déchargement étant adaptés pour engendrer de façon sélective le basculement des mains de convoyage en vue de leur déchargement latéral.

L'invention concerne également un dispositif de convoyage caractérisé en combinaison par tout ou partie des caractéristiques mentionnées ci-dessus ou ci-après.

D'autres buts, caractéristiques et avantages de l'invention apparaîtront à la lecture de la description suivante qui se réfère aux figures annexées dans lesquelles :
- la figure 1 est une vue partielle schématique en élévation d'un dispositif de convoyage selon un mode de réalisation de l'invention,
- les figures 2a, 2b sont des vues partielles schématiques du dispositif de la figure 1, la ligne de convoyage étant supposée entraînée à basse vitesse,
- les figures 3a, 3b sont des vues partielles schématiques du dispositif de la figure 1, la ligne de convoyage étant supposée entraînée à haute vitesse,
- la figure 4 est une vue schématique en coupe par un plan transversal à la chaîne sans fin d'un dispositif de convoyage selon un autre mode de réalisation de l'invention, illustrant deux mains de convoyage s'étendant de chaque côté de la chaîne sans fin en position de transport des objets par un dispositif de convoyage selon l'invention,
- la figure 5 est un graphe illustrant un exemple de commande pouvant être mise en oeuvre dans une unité de commande d'un dispositif de convoyage selon l'invention.

Un dispositif de convoyage selon l'invention est adapté pour assurer le transport d'objets 33 tels que des fruits ou légumes, et permettre, en fonction de critères de sélection prédéterminés, une évacuation sélective desdits fruits ou légumes 33 au niveau de zones 14 de déchargement disposées les unes à la suite des autres le long de trajets du dispositif de convoyage.

Un tel dispositif de convoyage est notamment conçu pour être intégré dans une unité de tri telle que décrite dans le brevet français FR 2716874 (ou US 5626238), et constituer le deuxième convoyeur de cette unité de tri en assurant le transport des fruits ou légumes entre les zones de chargement, de pesage et d'analyse optique de ces derniers, et les zones de déchargement, avec éventuellement un convoyeur intermédiaire adapté pour prendre en charge momentanément les fruits ou légumes en vue d'assurer leur pesée.

Les caractéristiques générales de ce dispositif de convoyage peuvent être par exemple celles décrites par US 6234297.

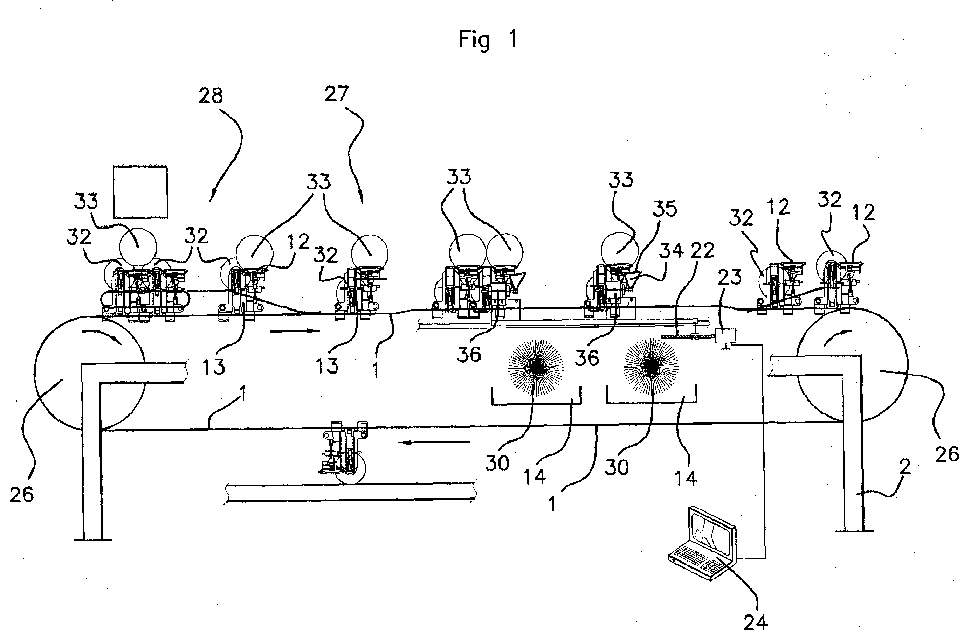

Sur les figures 1, 2a, 2b, 3a, 3b, les échelles ne sont pas respectées, à des fins d'illustration. En particulier, les fruits ou légumes 33, et les réceptacles de convoyage sont totalement disproportionnés par rapport aux dimensions générales de la ligne de convoyage.

Le dispositif de convoyage comprend un bâti 2 mécano soudé reposant sur le sol et au moins une ligne de convoyage comprenant une chaîne sans fin 1 engrenée autour de deux roues 26 dentées portées chacune par un arbre transversal monté rotatif par rapport au bâti 2, et dont l'une au moins est entraînée en rotation par un dispositif d'entraînement motorisé. La chaîne sans fin 1 définit donc une direction longitudinale d'entraînement de la ligne de convoyage.

La ligne de convoyage comprend par exemple comme représenté figure 1 schématiquement, un poste d'analyse optique 28 et un poste 27 de pesée des objets transportés, ces postes 28, 27 étant adaptés pour délivrer des signaux à une unité 24 de commande apte à commander le déchargement sélectif des objets dans des postes de déchargement 14. Sur la figure 1 les postes 28, 27 sont représentés uniquement très schématiquement.

La chaîne sans fin 1 est portée, au niveau d'un brin supérieur aller de la ligne de convoyage, par un profilé longitudinal horizontal 4 de section rectangulaire, réalisé en matériau à faible coefficient de frottement, par exemple en polyéthylène, et formant un rail 4 de guidage de ladite chaîne sans fin sur lequel se déplacent des rouleaux de maillons de cette dernière.

Le rail 4 de guidage est lui-même porté par un profilé 6 d'embase métallique doté à cet effet d'une gorge supérieure horizontale 5 dans laquelle la partie inférieure dudit rail 4 de guidage est insérée en force. Il est à noter que le rail 4 de guidage et le profilé 6 sont ainsi assemblés fixes l'un par rapport à l'autre, et peuvent, en variante non représentée, être formés d'une seule et même pièce profilée en un matériau rigide à faible coefficient de frottement.

Le profilé 6 d'embase est monté sur un longeron 3 du bâti 2 par l'intermédiaire de deux coulisses latérales 7, l'une de chaque côté, recevant chacune une aile latérale 9 du profilé 6. Chaque coulisse latérale 7 est fixée sur le longeron 3 par des vis ou boulons 10 et est dotée d'une gorge 11 adaptée pour recevoir une aile latérale 9 du profilé 6 et la guider en translation longitudinale sans jeu. L'ensemble forme ainsi une bride de fixation du profilé 6 et du rail 4 de guidage par rapport au bâti 2 assurant un maintien rigide du rail 4 de guidage tout en autorisant des déplacements en translation longitudinale par coulissement du profilé 6 dans les coulisses 7.

Le dispositif de convoyage comprend également des réceptacles de convoyage répartis le long de la chaîne sans fin 1. Dans le mode de réalisation représenté, les réceptacles de convoyage comportent des mains 12 de convoyage s'étendant transversalement par rapport à des supports 13 adaptés pour venir s'encliqueter dans les maillons de la chaîne sans fin 1, les mains 12 de convoyage étant articulées sur les supports 13 de façon à pouvoir pivoter entre une position de transport des fruits ou légumes, et une position basculée d'évacuation desdits fruits ou légumes au niveau de l'une des zones 14 de déchargement (dont deux seulement sont représentées à titre d'illustration sur les figures 1, 2a, 2b, 3a, 3b mais dont le nombre est quelconque, selon les différents lots à former par triage).

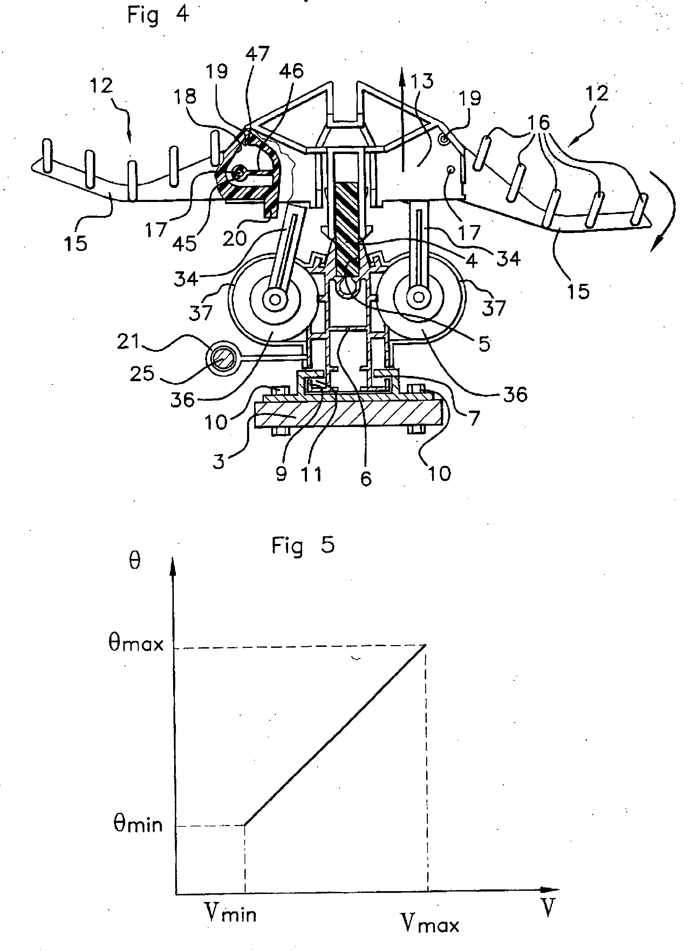

Il est à noter que dans le mode de réalisation schématiquement représenté sur les figures 1, 2a, 2b, 3a, 3b, chaque support 13 comprend une seule main 12 de convoyage susceptible de basculer d'un côté ou de l'autre, et les réceptacles de convoyage comportent également des rouleaux 32 transversaux permettant de supporter entre eux les objets 33 au moins dans certaines portions de la ligne de convoyage, notamment au niveau d'un poste 28 d'analyse optique. Ces rouleaux 32 sont montés sur les supports 13 communs aux rouleaux 32 et aux mains 12, et peuvent être déplacés verticalement, notamment grâce à des rampes inclinées solidaires du bâti 2, entre une position supérieure active où ils supportent les objets 33, et une position inférieure inactive où les objets 33 sont supportés par les mains 12 de convoyage. Dans le deuxième mode de réalisation représenté figure 4, chaque support 13 porte deux mains 12 de convoyage s'étendant respectivement de part et d'autre du support 13.

Chaque main 12 de convoyage est réalisée en une matière synthétique et comprend une barre centrale 15 s'étendant transversalement et présentant, selon sa longueur, une forme concave. Des doigts 16 s'étendent de part et d'autre de la barre centrale 15. Les doigts 16 sont disposés en regard les uns des autres et incurvés vers le haut de façon à conférer à ladite main de convoyage la forme générale d'une cuvette allongée transversalement par rapport à la direction longitudinale de la chaîne sans fin 1, de façon à pouvoir loger un objet 33 (fruit ou légume).

Chaque main 12 de convoyage est articulée à un support 13 de façon à pouvoir pivoter autour d'un axe 17 de basculement horizontal longitudinal, et s'étend transversalement vers l'extérieur de la chaîne sans fin 1 à partir de l'axe 17 basculement. Chaque main 12 de convoyage présente une portée 18 de verrouillage en position de transport des fruits ou légumes dans laquelle la barre centrale 15 s'étend au moins sensiblement horizontalement de sorte que la main 12 de convoyage peut recevoir et porter un fruit ou légume. Cette portée 18 de verrouillage forme une butée contre un organe 19 de blocage solidaire du support 13 et empêchant le basculement de la main 12 de convoyage.

Dans l'exemple représenté figure 4 la portée 18 est formée par un évidement ménagé dans le corps de la main 12 de convoyage, et présente une encoche 47 interne de verrouillage apte à loger un arbre 19 longitudinal solidaire du support 13 et faisant office d'organe 19 de blocage. L'axe 17 d'articulation de la main 12 de convoyage est logé par un manchon 45 ménagé au niveau d'une extrémité d'une lame 46 flexible déformable solidaire du corps de la main 12 de convoyage. En position de transport, l'arbre 19 est logé dans l'encoche 47. Si le corps de la main de convoyage 12 est déplacé vers le haut (partie droite de la figure 4), la lame 46 flexible fléchit, ce qui permet à l'arbre 19 de se dégager de l'encoche 47, la main 12 de convoyage pouvant alors pivoter pour basculer autour de son axe 17, l'arbre 19 glissant le long de la portée 18 interne jusqu'à venir en butée contre la portion de jonction de la lame flexible 46 avec la portée 18.

Le dispositif de convoyage comprend par ailleurs des moyens de déclenchement adaptés pour provoquer de façon sélective le basculement des mains de convoyage au niveau des zones de déchargement.

Ces moyens de déclenchement comprennent une came 34 dotée d'une face supérieure plane inclinée 35, ascendant en considérant le sens de défilement de la ligne de convoyage, ladite came 34 étant portée par la tige d'actionnement d'un électroaimant 36 monté fixe sur le profilé 6 et apte à la faire basculer autour d'un axe longitudinal entre deux positions :
- une position passive (partie gauche de la figure 4) dans laquelle la came 34 est inclinée en direction du rail de guidage 4 et permet le passage des mains 12 de convoyage sans interférer avec ces dernières,
- une position active (partie droite de la figure 4) où la came 34 s'étend sensiblement verticalement et se trouve sur la trajectoire d'un talon 20 d'une main 12 de convoyage, dans laquelle, grâce à son profil, elle provoque un déplacement de ce talon 20 vers le haut de façon à déverrouiller la portée 18 de verrouillage de l'organe 19 de blocage, et donc à autoriser un basculement de la main 12 de convoyage en position inclinée vers le bas dans laquelle le fruit ou légume porté initialement par la main 12 de convoyage est déchargé par gravité dans une zone 14 de déchargement.

Chaque électroaimant 36 est monté fixe sur une des faces latérales du profilé 6 au moyen de bagues sensiblement semi-cylindriques 37 présentant, d'une part, au niveau de leur bord longitudinal supérieur, un profil de crochetage sur des nervure longitudinales dont est pourvu ledit profilé 6 et, d'autre part, un rebord inférieur plan d'appui contre le profilé 6 permettant de solidariser ladite bague sur ce dernier au moyen de vis. Chaque électroaimant 36 est relié à l'unité 24 de commande de façon à être commandé par cette dernière dans l'une ou l'autre des deux positions passive ou active susmentionnée de sa tige d'actionnement.

La position longitudinale de l'électroaimant 36 par rapport à une zone 14 de déchargement à laquelle il est associé, détermine l'instant et l'endroit de la ligne de convoyage auxquels la main 12 de convoyage bascule pour un déchargement dans cette zone 14 de déchargement, et donc l'instant et l'endroit précis auxquels intervient ce déchargement. Cette position longitudinale doit être déterminée en fonction de la trajectoire de chute du fruit ou légume entre la main 12 de convoyage et la zone 14 de déchargement, et donc notamment en fonction des caractéristiques des fruits ou légumes (poids, dimensions influençant la résistance à l'air...) et de la vitesse d'entraînement de la ligne de convoyage.

Dans un dispositif selon l'invention, cette position longitudinale peut être ajustée. En effet, chaque profilé 6 monté coulissant le long du longeron 3 est solidaire d'un chariot mobile 21 d'une vis à billes 22 dont la tige 25 filetée est entraînée en rotation par un moteur 23 commandé par l'unité 24 de commande, cette dernière étant formée par exemple par un poste informatique.

Lorsque le moteur 23 tourne, la tige 25 est entraînée en rotation, le chariot mobile 21 se déplace en translation longitudinale le long de la tige 25 qui s'étend parallèlement à la direction longitudinale du longeron 3 et du profilé 6. Le profilé 6 et les différents électroaimants 36 qu'il porte sont donc déplacées longitudinalement le long du longeron 3 sur une distance qui correspond à l'amplitude angulaire θ de rotation du moteur 23.

Le moteur 23 comprend avantageusement un codeur numérique rotatif fournissant un signal représentatif de la position angulaire θ de la tige 25 de la vis à billes 22. Ce signal est fourni à l'unité 24 de commande qui peut ainsi déterminer à tout instant la position longitudinale du profilé 6 par rapport au longeron 3, et donc par rapport aux brosses d'amortissement des zones 14 de déchargement, et élaborer un signal de commande pour le moteur 23 adapté pour le faire tourner d'une certaine amplitude angulaire θ correspondant à une amplitude de déplacement longitudinal prédéterminée du profilé 6 et des électroaimant 36 par rapport au bâti 2. En variante, le moteur 23 peut être un moteur pas à pas dont la position angulaire est connue à tout instant et correspond aux différentes commandes qui lui ont été imparties successivement à partir d'une position initiale. Autrement dit, le moteur 23 peut être aussi bien commandé en boucle fermée (c'est-à-dire avec une rétroaction à partir d'un signal de mesure de sa position angulaire θ) ou en boucle ouverte (moteur pas à pas). Le moteur 23 peut être choisi parmi un moteur électrique, un moteur hydraulique, un moteur pneumatique...

Lorsque le moteur 23 est arrêté, le chariot mobile 21 est bloqué en position et est maintenu en place par rapport au bâti 2, du fait que la vis à billes 22 constitue une transmission mécanique irréversible. Il en va de même du profilé 6 et des différents électroaimants 36 qu'il porte. Rien n'empêche d'utiliser un dispositif spécifique de blocage verrouillable sur commande, ou toute autre transmission entre le moteur 23 et le profilé 6 apte à assurer le maintien en position du profilé 6 après un déplacement en translation.

L'unité 24 de commande est adaptée pour commander sélectivement chaque électroaimant 36 de déchargement, et pour assurer au niveau de chaque zone de déchargement, une arrivée des fruits ou légumes déchargés des mains de convoyage dans une zone d'impact avec un organe d'amortissement de chute tel qu'une brosse rotative 30, qui est au moins sensiblement la même.

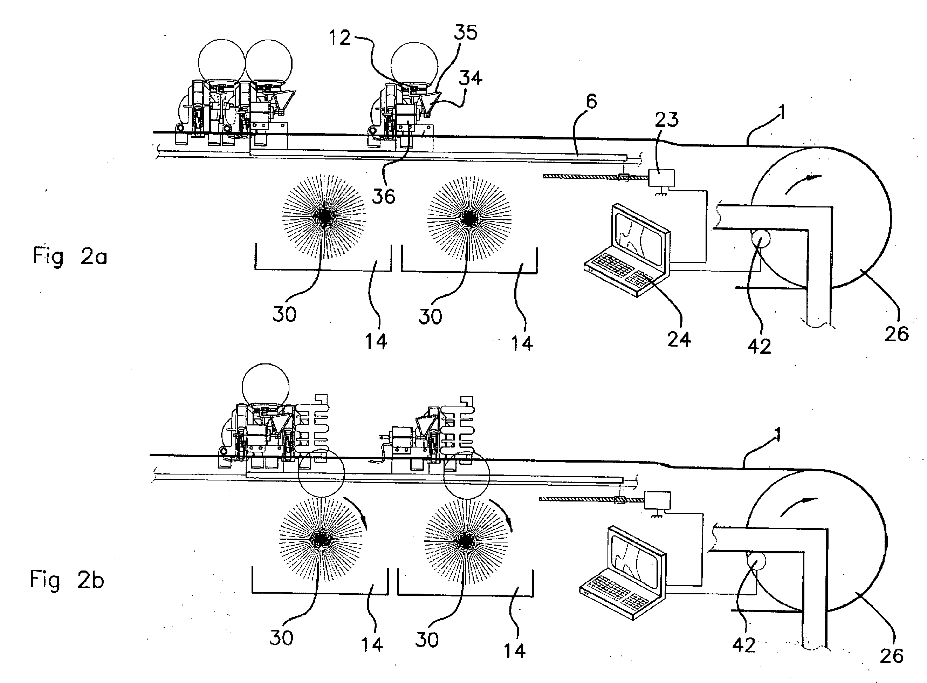

Dans l'exemple des figures 2a et 2b, la ligne de convoyage est supposée entraînée à basse vitesse et le profilé 6 et les électroaimants 36 sont dans une position la plus vers l'aval par rapport aux zones 14 de déchargement et aux brosses rotatives 30 d'amortissement. Du fait de cette faible vitesse, les fruits ou légumes 33 chutent rapidement avec une trajectoire relativement verticale pour atteindre les brosses 30 d'amortissement dans leur partie supérieure.

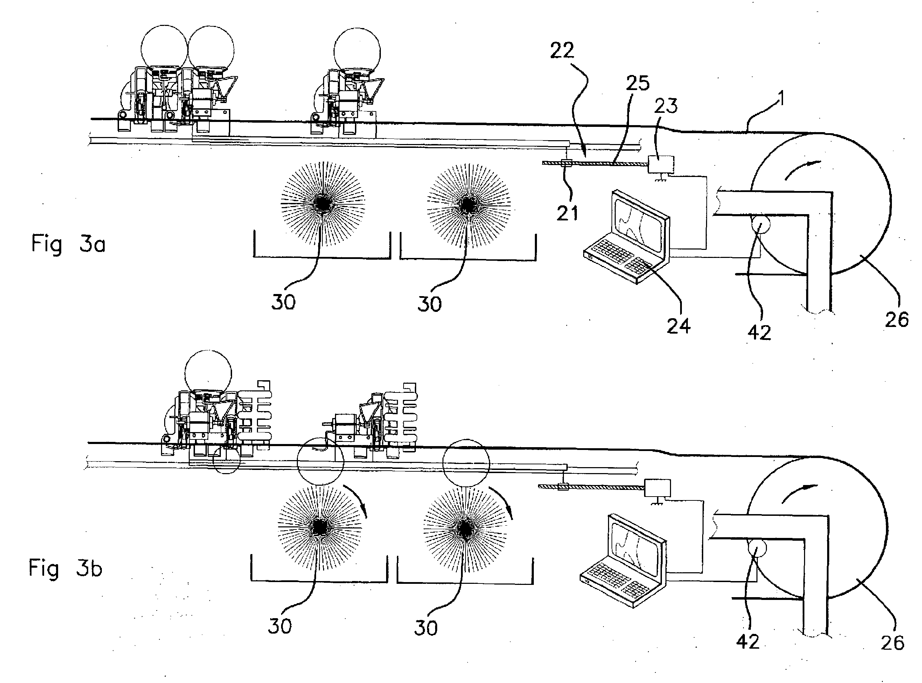

Dans l'exemple des figures 3a et 3b, la ligne de convoyage est supposée entraînée à haute vitesse et le profilé 6 et les électroaimants 36 sont décalés grâce au moteur 23 sur commande de l'unité 24, dans une position la plus vers l'amont par rapport aux zones 14 de déchargement et aux brosses rotatives 30 d'amortissement. Du fait de la plus haute vitesse, les fruits ou légumes chutent moins rapidement avec une trajectoire plus horizontale, et atteignent encore les brosses 30 d'amortissement dans leur partie supérieure.

Avantageusement, l'unité 24 de commande est adaptée pour permettre un ajustement initial sur commande d'un opérateur pour une vitesse nominale de la ligne de convoyage.

L'unité 24 de commande est également adaptée pour procéder automatiquement à des ajustements en temps réel, par exemple selon la vitesse réelle de la ligne de convoyage mesurée par un capteur tachymètrique 42 associé à l'une des roues 26 d'entraînement et/ou de guidage de la chaîne 1, ce capteur 42 étant relié à l'unité 24 de commande pour lui délivrer un signal représentatif de la vitesse V de la ligne de convoyage. En particulier, un tel ajustement est utile lors des phases de démarrage et d'arrêt de la ligne de convoyage, qui peuvent être mises à profit pour le transport et le tri des objets.

Également, de tels ajustements en temps réel peuvent être prévus en fonction des caractéristiques des fruits ou légumes transportés, tels que déterminées par des postes d'analyse situés en amont des zones 14 de déchargement, notamment les postes 27 de pesée et/ou 28 d'analyse optique. On obtient alors un ajustement extrêmement fin de la position des électroaimants 36, ce qui permet en particulier d'optimiser l'efficacité des organes d'amortissement de chute des objets, ces organes d'amortissement pouvant être plus complexes que de simples brosses rotatives 30.

La figure 5 représente un exemple de commande de l'angle θ de rotation du moteur 23 par l'unité 24 de commande en fonction de la vitesse V mesurée de la ligne de convoyage. La fonction de commande doit être monotone et de préférence continue, notamment croissante. Dans cet exemple, la fonction de commande est affine (et même linéaire) entre une vitesse minimum Vmin pour laquelle l'amplitude angulaire de rotation du moteur 23 est minimum (θmin) et une vitesse maximum Vmax pour laquelle l'amplitude angulaire de rotation du moteur 23 est maximum (θmax). Il va de soi que toute autre loi de commande peut être utilisée, par exemple une loi polynomiale, logarithmique, exponentielle, ou quelconque.

L'unité 24 de commande peut être adaptée pour exercer les fonctions mentionnées ci-dessus par simple programmation.

Les zones 14 de déchargement sont par exemple des tapis convoyeurs entraînés dans une direction transversale à la direction longitudinale de la ligne de convoyage pour alimenter des postes d'emballage (non représentés) de façon connue en soi.

Le dispositif de convoyage comporte par ailleurs des moyens de ré-enclenchement des mains 12 de convoyage, adaptés pour les amener à pivoter de leur position basculée vers leur position de transport verrouillée. Ces moyens de ré-enclenchement peuvent être de toute nature et sont par exemple formés de rampes ou de disques associés à la roue dentée aval (par exemple comme décrit US 6234297) de façon à se trouver sur le trajet des mains de convoyage pour amener ces dernières à pivoter vers leur position de transport.

L'invention peut faire l'objet de nombreuses variantes de réalisation par rapport aux modes de réalisation représentés sur les figures et décrits ci-dessus.

En particulier, rien n'empêche de prévoir un dispositif d'actionnement spécifique individuel pour chaque électroaimant, ou en tout cas plusieurs dispositifs d'actionnement, chaque dispositif d'actionnement permettant l'ajustement longitudinal d'un groupe d'électroaimants. Par exemple, si des zones de déchargement et/ou des organes d'amortissement de différents types sont prévus , un ensemble (dispositif d'actionnement associé à un profilé coulissant portant les électroaimants) d'ajustement de position longitudinale peut être prévu pour chaque type de zone de déchargement et/ou pour chaque type d'organe d'amortissement. Selon une autre variante, les électroaimants situés d'un côté de la ligne de convoyage sont portés par un demi profilé coulissant par rapport au longeron 3 et associé à un premier dispositif d'actionnement, tandis que les électroaimants situés de l'autre côté de la ligne de convoyage sont portés par un autre demi profilé coulissant par rapport au longeron 3 et associé à un deuxième dispositif d'actionnement.

## Revendications

1. Dispositif de convoyage d'objets, notamment de fruits ou légumes, adapté pour assurer le transport desdits objets et leur évacuation sélective au niveau de zones (14) de déchargement, comprenant :
- un bâti (2) fixe,
- au moins une ligne de convoyage apte à transporter les objets par rapport au bâti (2) selon une direction d'entraînement, dite direction longitudinale,
- une pluralité de zones de déchargement réparties le long du bâti (2),
- pour chaque zone (14) de déchargement, des organes (34, 35, 36) de déclenchement du déchargement adaptés pour engendrer de façon sélective le déchargement latéral d'objets arrivant au niveau de ladite zone (14) de déchargement,
**caractérisé en ce qu'**au moins un organe (34, 35, 36) de déclenchement du déchargement est monté par rapport au bâti (2) de façon à pouvoir être déplacé en translation selon la direction longitudinale et selon au moins deux positions longitudinales d'ajustement distinctes, et associé à un dispositif (22, 23) d'actionnement apte à l'entraîner en déplacement en translation et à le maintenir rigidement en toute position longitudinale d'ajustement par rapport au bâti (2), **en ce que** le dispositif (22, 23) d'actionnement est relié à une unité (24) de commande de façon à pouvoir être commandé par cette dernière en fonction de critères prédéterminés comprenant la vitesse d'entraînement des objets par la ligne de convoyage, et **en ce que** l'unité (24) de commande est adaptée pour commander ledit dispositif (22, 23) d'actionnement dans le sens de déplacement de chaque organe (34, 35, 36) de déclenchement du déchargement qui lui est associé vers l'amont lorsque la vitesse d'entraînement des objets augmente, et vers l'aval lorsque la vitesse d'entraînement des objets diminue, de sorte que la position longitudinale de cet organe (34, 35, 36) de déclenchement du déchargement est automatiquement ajustable.

2. Dispositif selon la revendication 1, **caractérisé en ce qu'**au moins un organe (34, 35, 36) de déclenchement du déchargement dont la position longitudinale est ajustable, est monté par rapport au bâti (2) de façon à pouvoir être déplacé par un dispositif (22, 23) d'actionnement en translation longitudinale selon une course d'ajustement entre deux positions longitudinales extrêmes amont et aval, et à être maintenu rigidement en toute position longitudinale intermédiaire de ladite course d'ajustement par rapport au bâti (2).

3. Dispositif selon l'une des revendications 1 ou 2, **caractérisé en ce que** l'unité (24) de commande est adaptée pour placer chaque organe (34, 35, 36) de déclenchement du déchargement à une distance vers l'amont d'un point fixe de référence du bâti (2) qui est une fonction monotone de la vitesse d'entraînement des objets le long de la ligne de convoyage.

4. Dispositif selon la revendication 3, **caractérisé en ce que** ladite fonction croissante est une fonction affine.

5. Dispositif selon l'une des revendications 1 à 4, **caractérisé en ce que** ledit dispositif (22, 23) d'actionnement comprend un moteur (23) rotatif entraînant une vis à billes (22) comprenant un chariot (21) solidaire d'un support (6) portant chaque organe (34, 35, 36) de déclenchement du déchargement associé à ce dispositif (22, 23) d'actionnement.

6. Dispositif selon l'une des revendications 1 à 5, **caractérisé en ce que** :
- les organes (34, 35, 36) de déclenchement du déchargement des différentes zones de déchargement d'une même ligne de convoyage sont tous portés fixes sur un support (6) commun,
- ledit support commun est monté par rapport au bâti (2) de façon à pouvoir être déplacé en translation selon ladite direction longitudinale et associé à un dispositif (22, 23) d'actionnement apte à maintenir ledit support (6) commun rigidement en position par rapport au bâti (2),
- le dispositif (22, 23) d'actionnement est relié à l'unité (24) de commande de façon à pouvoir être commandé par cette dernière en fonction desdits critères prédéterminés.

7. Dispositif selon la revendication 6, **caractérisé en ce que** ledit support (6) commun est un rail de guidage d'une chaîne (1) sans fin de la ligne de convoyage.

8. Dispositif selon l'une des revendications 1 à 7, **caractérisé en ce que** chaque zone (14) de déchargement comprend une brosse (30) rotative de réception des objets apte à amortir la chute de ces derniers lors de leur déchargement de la ligne de convoyage, et **en ce que** ladite unité (24) de commande est adaptée pour ajuster la position longitudinale de chaque organe (34, 35, 36) de déclenchement du déchargement de telle sorte que, pour chaque zone (14) de déchargement, les objets chutent au moins sensiblement toujours dans une même zone d'une brosse (30) rotative.

9. Dispositif selon l'une des revendications 1 à 8, **caractérisé en ce que** la ligne de convoyage comprend une pluralité de mains (12) de convoyage réparties le long de la ligne de convoyage, articulées sur des supports (13) d'une chaîne (1) sans fin longitudinale entraînée en déplacement selon la direction longitudinale, et dotées d'organes (18, 19) de maintien desdites mains (12) de convoyage dans une position de transport des objets, les organes (34, 35, 36) de déclenchement du déchargement étant adaptés pour engendrer de façon sélective le basculement des mains (12) de convoyage en vue de leur déchargement latéral.

## Patentansprüche

1. Vorrichtung zur Förderung von Gegenständen, insbesondere von Obst oder Gemüse, die dazu ausgelegt ist, den Transport der Gegenstände und ihre selektive Evakuierung auf der Ebene der Entladebereiche (14) sicherzustellen, umfassend:
- einen festen Rahmen (2),
- mindestens eine Förderlinie, die ausgelegt ist, um die Gegenstände mit Bezug auf den Rahmen (2) in einer Antriebsrichtung, genannt Längsrichtung, zu transportieren,
- eine Vielzahl von Entladebereichen, die entlang des Rahmens (2) verteilt sind,
- für jeden Entladebereich (14) Organe (34, 35, 36) zur Auslösung der Entladung, die ausgelegt sind, um auf selektive Weise die seitliche Entladung von Gegenständen hervorzurufen, die auf der Ebene des Entladebereichs (14) ankommen;
**dadurch gekennzeichnet, dass** mindestens ein Organ (34, 35, 36) zur Auslösung der Entladung mit Bezug auf den Rahmen (2) derart montiert ist, dass es in Translation in der Längsrichtung und in mindestens zwei verschiedene Längs-Einstellungsrichtungen verschoben werden und mit einer Betätigungsvorrichtung (22, 23) assoziiert werden kann, die ausgelegt ist, um es in Translation zu verschieben und es in jeder Längs-Einstellungsrichtung mit Bezug auf den Rahmen (2) starr zu halten, und dadurch, dass die Betätigungsvorrichtung (22, 23) mit einer Steuervorrichtung (24) verbunden ist, um von dieser Letzteren gemäß vorbestimmten Kriterien gesteuert werden zu können, umfassend die Geschwindigkeit des Antriebs der Gegenstände durch die Förderlinie, und dadurch, dass die Steuereinheit (24) ausgelegt ist, um die Betätigungsvorrichtung (22, 23) in der Verschiebungsrichtung jedes Organs (34, 35, 36) zur Auslösung der Entladung, die damit assoziiert ist, aufwärts zu steuern, wenn sich die Geschwindigkeit des Antriebs der Gegenstände erhöht, und abwärts, wenn sich die Geschwindigkeit des Antriebs der Gegenstände verringert, so dass die Längsposition dieses Organs (34, 35, 36) zur Auslösung der Entladung automatisch einstellbar ist.

2. Vorrichtung nach Anspruch 1, **dadurch gekennzeichnet, dass** mindestens ein Organ (34, 35, 36) zur Auslösung der Entladung, dessen Längsposition einstellbar ist, mit Bezug auf den Rahmen (2) derart montiert ist, dass es durch eine Vorrichtung (22, 23) zur Betätigung in längs gerichteter Translation gemäß einem Einstellungsweg zwischen zwei längs gerichteten vorgelagerten und nachgelagerten Endpositionen verschoben werden kann und in jeder längs gerichteten Zwischenposition des Einstellungswegs mit Bezug auf den Rahmen (2) starr gehalten werden kann.

3. Vorrichtung nach einem der Ansprüche 1 oder 2, **dadurch gekennzeichnet, dass** die Steuereinheit (24) ausgelegt ist, um jedes Organ (34, 35, 36) zur Auslösung der Entladung in einem Abstand aufwärts von einem festen Referenzpunkt des Rahmens (2) anzuordnen, wobei es sich um eine monotone Funktion der Geschwindigkeit zum Antrieb der Gegenstände entlang der Förderrichtung handelt.

4. Vorrichtung nach Anspruch 3, **dadurch gekennzeichnet, dass** die zunehmende Funktion eine affine Funktion ist.

5. Vorrichtung nach einem der Ansprüche 1 bis 4, **dadurch gekennzeichnet, dass** die Betätigungsvorrichtung (22, 23) einen Drehmotor (23) umfasst, der eine Kugelschraube (22) antreibt, umfassend einen Wagen (21), der mit einem Träger (6) fest verbunden ist, der jedes Organ (34, 35, 36) zur Auslösung der Entladung trägt, der mit dieser Betätigungsvorrichtung (22, 23) assoziiert ist.

6. Vorrichtung nach einem der Ansprüche 1 bis 5, **dadurch gekennzeichnet, dass**
- die Organe (34, 35, 36) zur Auslösung der Entladung der verschiedenen Entladungsbereiche einer gleichen Förderlinie alle fest auf einem gemeinsamen Träger (6) getragen werden,
- der gemeinsame Träger mit Bezug auf den Rahmen (2) derart montiert ist, dass er in Translation in der Längsrichtung verschoben und mit einer Betätigungsvorrichtung (22, 23) assoziiert werden kann, die dazu in der Lage ist, den gemeinsamen Träger (6) mit Bezug auf den Rahmen (2) starr in seiner Position zu halten,
- die Betätigungsvorrichtung (22, 23) mit der Steuereinheit (24) verbunden ist, um von dieser Letzteren gemäß den vorbestimmten Kriterien gesteuert werden zu können.

7. Vorrichtung nach Anspruch 6, **dadurch gekennzeichnet, dass** der gemeinsame Träger (6) eine Führungsschiene einer Endloskette (1) der Förderlinie ist.

8. Vorrichtung nach einem der Ansprüche 1 bis 7, **dadurch gekennzeichnet, dass** jeder Entladungsbereich (14) eine Drehbürste (30) zur Aufnahme der Gegenstände umfasst, die ausgelegt ist, um den Fall dieser Letzteren bei ihrer Entladung von der Förderlinie zu dämpfen, und dadurch, dass die Steuereinheit (24) ausgelegt ist, um die Längsposition jedes Organs (34, 35, 36) zur Auslösung der Entladung derart einzustellen, dass für jeden Entladebereich (14) die Gegenstände mindestens im Wesentlichen immer in einen gleichen Bereich einer Drehbürste (30) fallen.

9. Vorrichtung nach einem der Ansprüche 1 bis 8, **dadurch gekennzeichnet, dass** die Förderlinie eine Vielzahl von Förderelementen (12) umfasst, die entlang der Förderlinie verteilt sind, die auf Stützen (13) einer längs gerichteten Endloskette (1) gelenkig verbunden sind, die in der Längsrichtung verschoben wird und mit Organen (18, 19) ausgestattet ist, um die Förderelemente (12) in einer Transportposition der Gegenstände zu halten, wobei die Organe (34, 35, 36) zur Auslösung der Entladung ausgelegt sind, um auf selektive Weise die Schwenkung der Förderelemente (12) für ihr seitliche Entladung zu erzeugen.

## Claims

1. Device for conveying objects, in particular pieces of fruit or vegetables, which is adapted to carry out the transporting of the said objects and the selective evacuation thereof at unloading areas (14), said device comprising:
- a fixed frame (2);
- at least one conveying line which is capable of transporting the objects, in relation to the frame (2), in a direction of conveyance referred to as the "longitudinal direction";
- a plurality of unloading areas distributed along the frame (2);
- for each unloading area (14), components (34, 35, 36) for triggering unloading which are adapted to selectively generate the lateral unloading of objects arriving at the said unloading area (14); **characterised in that** at least one component (34, 35, 36) for triggering unloading is mounted, in relation to the frame (2), in such a way as to be capable of being displaced in translation in the longitudinal direction and in accordance with at least two distinct longitudinal positions of adjustment, and is associated with an actuating device (22, 23) which is capable of conveying said component in displacement in translation and of holding it rigidly in any longitudinal position of adjustment in relation to the frame (2); **in that** the actuating device (22, 23) is connected to a control unit (24) in such a way as to be capable of being controlled by the latter in accordance with predetermined criteria including the speed of conveyance of the objects by the conveying line; and **in that** the control unit (24) is adapted to control the said actuating device (22, 23) in the direction of displacement of each component (34, 35, 36) for triggering unloading which is associated with it, in the upstream direction when the speed of conveyance of the objects increases, and in the downstream direction when the speed of conveyance of the objects decreases, in such a way that the longitudinal position of the said component (34, 35, 36) for triggering unloading is automatically adjustable.

2. Device according to Claim 1, **characterised in that** at least one component (34, 35, 36) for triggering unloading, the longitudinal position of which is adjustable, is mounted, in relation to the frame (2), in such a way as to be capable of being displaced by an actuating device (22, 23) in longitudinal translation along a path of adjustment between two extreme upstream and downstream longitudinal positions, and to be held rigidly in any intermediate longitudinal position in the said path of adjustment in relation to the frame (2).

3. Device according to either of Claims 1 or 2, **characterised in that** the control unit (24) is adapted to position each component (34, 35, 36) for triggering unloading at a distance, in the upstream direction, from a fixed reference point on the frame (2) which is a monotonic function of the speed of conveyance of the objects along the conveying line.

4. Device according to Claim 3, **characterised in that** the said increasing function is an affine function.

5. Device according to one of Claims 1 to 4, **characterised in that** the said actuating device (22, 23) comprises a rotary motor (23) driving a ball screw (22) comprising a carriage (21) which is integral with a support (6) carrying each component (34, 35, 36) for triggering unloading which is associated with the said actuating device (22, 23).

6. Device according to one of Claims 1 to 5, **characterised in that**:
- the components (34, 35, 36) for triggering unloading in the various unloading areas belonging to the same conveying line are all carried in a manner fixed on a common support (6);
- the said common support is mounted, in relation to the frame (2), in such a way as to be capable of being displaced in translation in the said longitudinal direction, and is associated with an actuating device (22, 23) which is capable of holding the said common support (6) rigidly in position in relation to the frame (2);
- the actuating device (22, 23) is connected to the control unit (24) in such a way as to be capable of being controlled by the latter in accordance with the said predetermined criteria.

7. Device according to Claim 6, **characterised in that** the said common support (6) is a rail for guiding an endless chain (1) belonging to the conveying line.

8. Device according to one of Claims 1 to 7, **characterised in that** each unloading area (14) comprises a rotary brush (30) for receiving the objects which is capable of cushioning their fall when they are unloaded from the conveying line; and **in that** the said control unit (24) is adapted to adjust the longitudinal position of each component (34, 35, 36) for triggering unloading in such a way that, in the case of each unloading area (14), the objects always fall at least substantially within the same area of a rotary brush (30).

9. Device according to one of Claims 1 to 8, **characterised in that** the conveying line comprises a plurality of conveying hands (12) which are distributed along said conveying line, are articulated on supports (13) belonging to an endless longitudinal chain (1) which is driven in displacement in the longitudinal direction, and are equipped with components (18, 19) for holding the said conveying hands (12) in a position for transporting the objects, the components (34, 35, 36) for triggering unloading being adapted to selectively generate the rocking of the conveying hands (12) with a view to their lateral unloading operation.
